# EUROPEAN PATENT APPLICATION

(11) **EP 2 669 756 A1**
(43) Date of publication of application: **04.12.2013**
(21) Application number: 11857189.2
(22) Date of filing: 29.11.2011
(51) Int. Cl.: G05B 19/418, G06Q 50/04, G06Q 50/10, H02G 1/06

(54) **WIRING OPERATION INSTRUCTION METHOD**

(30) Priority: 25.01.2011 JP 2011012742
(71) Applicant: Hitachi, Ltd., Tokyo 100-8280 (JP)
(72) Inventor: KAWABE, Shinichi, Yokohama-shi Kanagawa 244-0817 (JP)
(74) Representative: Calderbank, Thomas Roger
(86) International application number: PCT/JP2011/077581
(87) International publication number: WO 2012/101898

(57) **Abstract**

In order to provide a wiring operation instruction method which is capable of shortening time for connection operations and reducing connection errors, in this wiring operation instruction method, a wire number (bar code) for identifying information of a connection destination for a filament is attached to the filament or to a filament bundle, and upon reading (S51) of the wire number using a reader, a control unit determines the number, accesses a database, extracts design information for attachment apparatuses and connection procedures stored in the database which are required for a wire connecting operation for the filament, and displays (S52) the information upon a display device which has been placed in the vicinity of the location of the operation.

## Description

### Technical Field

The present invention relates to a wiring operation instruction method.

### Background Art

Background art in the present technical field is found in Japanese Unexamined Patent Application Publication No. 2008-99407 (Patent Literature 1). In this publication, there is a description that "IC tags are attached to both ends of all internal cables contained within a multi-conductor cable and cable numbers are written into the IC tags beforehand, and when an operation for connecting the cables to a control panel or the like is performed, information held in the IC tags is read and used for connection work progress management and completion state ascertainment". The background art is also found in Japanese Unexamined Patent Application Publication No. 2006-271154 (Patent Literature 2). In this publication, there is described a "method and system for management of device and cable connections in which total management of information related to cables and devices (including connection steps and connection procedures) in addition to management of connecting cables to be connected is carried out".

### Citation List

### Patent Literature

Patent Literature 1: Japanese Unexamined Patent Application Publication No. 2008-99407
Patent Literature 2: Japanese Unexamined Patent Application Publication No. 2006-271154

### Summary of Invention

### Technical Problem

While, in the above-mentioned Patent Literature 1 and Patent Literature 2, a method for making a work progress management of device and wire connections and grasping the states of the connections after being completed is described, there is no description about how to shorten the time required for a connection operation and how to reduce connection errors. Also, there is no description about a method of correcting a faulty connection if it is found after an inspection of the states of the connections.

Therefore, a first object of the present invention is to provide a wiring operation instruction method enabling to shorten the time taken to perform a connection operation and to reduce connection errors.

A second object of the present invention is to provide a wiring operation instruction method enabling to inspect the states of connections and correct connection errors easily and to shorten the time taken to perform such an operation.

### Solution to Problem

To achieve the above objects, for example, a configuration and a processing procedure described in claims are adopted. While the present application includes a plurality of solutions to challenges implied in the foregoing context, the present invention makes use of, for example, the following solutions.

One solution is a wiring operation instruction method using a system including mark reading means for reading wire identification marks attached to wires or a wire bundle, a design database in which design information required for connecting the wires or the wire bundle is stored, control means for retrieving information including at least some of the design information stored in the design database according to wire information of the wire identification marks read by the mark reading means, and display means for displaying the information retrieved from the design database, the wiring operation instruction method including: a step in which the mark reading means reads a first one of the wire identification marks attached to the wire bundle; a step in which, according to information of the first wire identification mark read by the mark reading means, the control means retrieves from the design database and outputs a two-dimensional view or/and a three-dimensional view presenting positions where devices that should be interconnected with the wire bundle are installed, included in the design information; and a step in which the display means displays a view that has thus been output.

Another solution is a wiring operation instruction method using a system including mark reading means for reading wire identification marks attached to individual wires of a wire bundle, a design database in which design information required for connecting the wires is stored, control means for retrieving information including at least some of the design information stored in the design database according to wire information of the wire identification marks read by the mark reading means, and display means for displaying the information retrieved from the design database, the wiring operation instruction method including: a displaying step in which the display means displays an order in which to read the wire identification marks attached to the individual wires, in which an operation of connecting the individual wires to a specified device was completed; a reading step in which the mark reading means reads the wire identification marks; and a checking step in which the control means checks information of the wire identification marks which have been read against device connection information included in the design information registered in the design database and checks whether a wire connection operation is performed properly.

### Advantageous Effects of Invention

According to the present invention, it is possible to provide a wiring operation instruction method enabling to shorten the time taken to perform a connection operation and to reduce connection errors by displaying, according to information of wire identification marks attached to wires and a wire bundle, design information on a device to which the wires should be connected. It is also possible to provide a wiring operation instruction method enabling to inspect the states of connections and correct connection errors easily and to shorten the time taken to perform such an operation.

### Brief Description of Drawings

Fig. 1 is a diagram of a system configuration for use with a wiring operation instruction method pertaining to a first embodiment.
Fig. 2 is a wire connection diagram for explaining inter-device wire connections.
Fig. 3 is a flowchart illustrating a harness preparation procedure.
Fig. 4 is a flowchart illustrating a conventional wire connection operation procedure.
Fig. 5 is a flowchart illustrating a wire connection procedure in a wiring operation instruction method pertaining to the first embodiment.
Fig. 6 is a diagram presenting an example of a screen indicating a device to which a wire should be connected in the wiring operation instruction method pertaining to the first embodiment.
Fig. 7 is a diagram presenting another example of a screen indicating the wire connection position within the device to which the wire should be connected in the wiring operation instruction method pertaining to the first embodiment.
Fig. 8 is a schematic diagram of a terminal connecting block for explaining an inspection method after wire connections in a wiring operation instruction method pertaining to a second embodiment.
Fig. 9 is a diagram presenting an example of a screen indicating a device to be inspected in the wiring operation instruction method pertaining to the second embodiment.
Fig. 10 is a diagram presenting an example of a screen displaying an inspection result and giving a corrective instruction in the wiring operation instruction method pertaining to the second embodiment.
Fig. 11 is a diagram presenting another example of a screen giving a corrective instruction in the wiring operation instruction method pertaining to the second embodiment.
Fig. 12 is a diagram presenting another example of a screen giving a corrective instruction in the wiring operation instruction method pertaining to the second embodiment.
Fig. 13 is a diagram presenting an example of a screen indicating devices to be interconnected in the wiring operation instruction method pertaining to the first embodiment.
Fig. 14 is a diagram presenting an example of an inter-device wiring list.
Figs. 15A and 15B are diagrams presenting examples of wire number marking in the wiring operation instruction method pertaining to the first embodiment.

### Description of Embodiments

As one embodiment for carrying out the invention, wire numbers attached to wires and a harness number attached to a bundle (harness) of the wires are read by a number reading means and, through the use of information of the wire numbers/harness number, information on devices to be interconnected and connection positions within the devices stored in a database as well as an operation procedure are displayed in real time on a display device placed close to an operator.

In addition, an inspection procedure after completion of a wire connection operation is displayed on the display device placed close to an operator. First of all, to prevent an operator from incorrectly perceiving a device to be inspected, a view presenting the device that is easy for the operator to understand is displayed using a three-dimensional view, photograph, or the like. An inspection method includes displaying the device to be inspected and wires on a display screen, reading the wire numbers attached to the wires by the number reading means, checking the information of the wire numbers against information for the device to which the wires should be connected and the connection positions, and detecting a faulty connection.

By reading wire numbers attached to wires and a harness number attached to a bundle of the wires by the number reading means and, through the use of information of the wire numbers/harness number, displaying information on devices to be interconnected and connection positions within the devices stored in a database as well as an operation procedure in real time on the display device placed close to an operator, it is becomes possible even for an unskilled worker to find the devices to be interconnected and wire connection positions easily and in a short time and it is achievable to shorten the time taken to perform a connection operation. It is also achievable reduce errors in a wire connection operation.

In the following, the invention will be described in detail by way of embodiments and using the drawings.

### First Embodiment

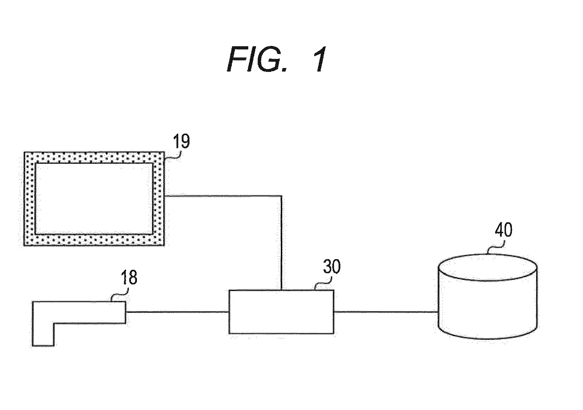

Descriptions are provided for a first embodiment, using Figs. 1 through 7 and Figs. 13 through 15. Fig. 1 is a diagram exemplifying a system configuration for use with a wiring operation instruction method pertaining to the present embodiment. The present system is comprised of a reader (mark reading means) 18 for reading wire numbers and a wire bundle (harness) number attached to wires and a wire bundle to be used in a wire connection operation, a display device 19 that conveys operation instruction details to an operator, a design database 40 in which design information such as an inter-device wiring list, harness diagram, actual wiring diagram, and operation procedure is stored, and a control unit 30 that carries out control of the reader 18, access to the design database, determination of an operation procedure, an inspection method, etc., according to data from the reader and information in the design database, and control of the display device 19. Even in other drawings, the same reference numerals denote the same components.

The design database 40 is comprised of design information such as an inter-device wiring list representing inter-device connections, a harness diagram, an actual wiring diagram, and an operation procedure which are necessary for a wire connection operation and a storage device such as a hard disc for recording and retaining such design information.

The control unit is comprised of a control program presenting an operating procedure or the like which has been registered beforehand and a processor exerting control of the reader 18, display device 19, and design database by executing such program.

While, in the present embodiment, an example is provided in which the control unit 30 and the display device 19, the control unit 30 and the reader 18, or the control unit 30 and the design database 40 are connected by a cable respectively, the control unit 30 can be connected with the others by way of communication. Particularly, by connecting the control unit 30 and the design database 40 by way of communication, it becomes unnecessary to carry the design database to a site of operation and it is possible to reduce the amount of carriage and to eliminate a risk of loss of information. Moreover, by connecting the reader 18 with the control unit 30 by way of communication, harness and cable entangling is avoided and the easiness to work in site is improved.

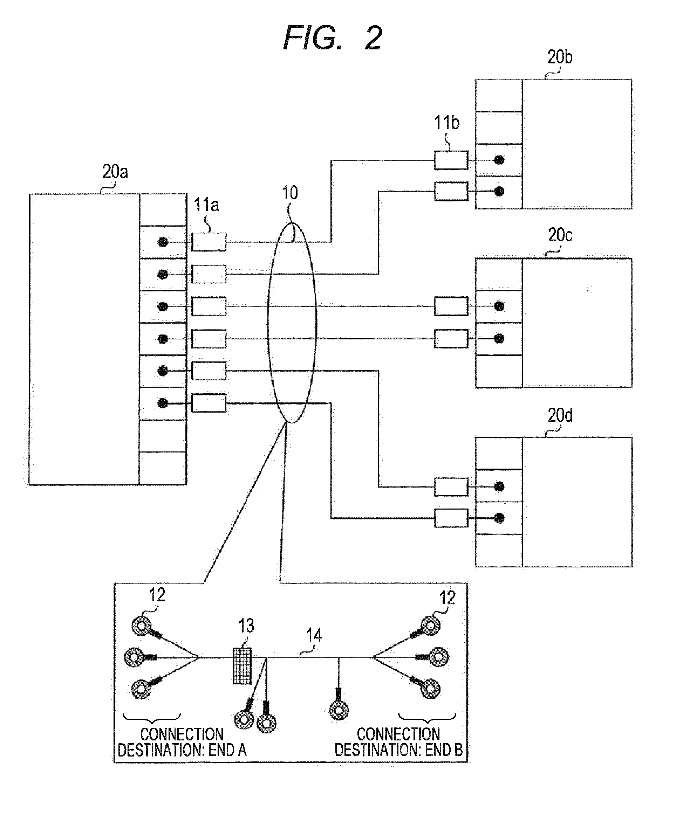

An explanatory diagram of inter-device wire connections is presented in Fig. 2. As is presented in Fig. 2, for electrically connecting a device A 20a with a device B 20b, a device C 20c, and a device D 20D, it is a general practice to, first, prepare a bundle of wires 10, which is called a harness 14, in which a given number of wires having a specified length are assembled, and interconnect the devices using this harness 14. In the figure, a left-hand connection destination of the harness is written as end A (to connect to the device A) and a right-hand connection destination of the harness is written as end B (to connect to the device B); however, the right-hand connection destination of the harness may be to connect to the device C or the device D.

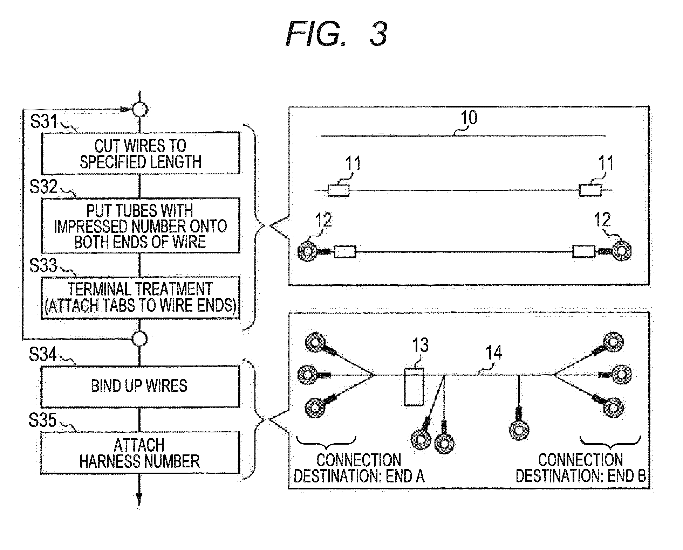

A harness 14 is prepared by a procedure as is illustrated in Fig. 3, based on design information such as an inter-device wiring list, harness diagram, and actual wiring diagram. Based on information described in an inter-device wiring list (which will be described later), first, wires 10 are cut to a specified length (S31). Then, tubes 11 with an impressed number are put onto both ends of a wire 10 (S32). After that, terminals 12 which are convenient for connecting the wire 10 to a device may be attached to the ends of the wire 10 (S33). After preparing a given number of wires 10 through the above-described procedure, a plurality of the wires 10 are bundled and bound up with a binding band or the like (S34). Then, a harness tag 13 with an impressed harness number is attached to it to complete a harness (S35).

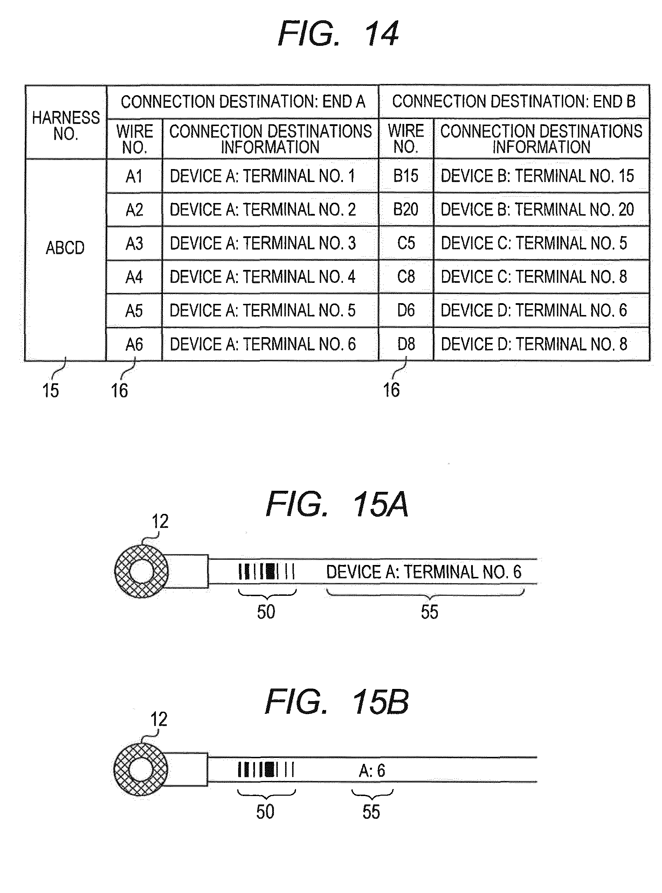

Next, a conventional wire connection operation is described using Figs. 2, 4, and 14. An example of an inter-device wiring list is presented in Fig. 14. In the inter-device wiring list of Fig. 14, there are described a harness number 15, wire numbers 16 marked on both ends of respective wires constituting the harness, and connection destinations per wire number of the wires.

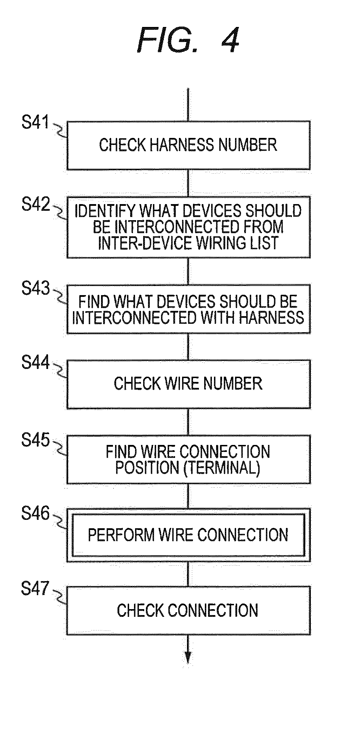

A conventional wire connection operation is generally performed by an operation procedure which is illustrated in Fig. 4. A first step is to check the harness number 15 impressed on a harness tag 13 attached to a harness 14 to be used in an wire connection operation (S41), followed by finding an inter-device wiring list having the corresponding harness number from among a set of inter-device wiring lists and, from the list, checking, inter alia, what type of devices should be interconnected (S42). A next step is to find what devices should be interconnected with the harness 14, namely, devices A, B, C, and D from among a set of devices to be interconnected installed in a control panel 5 (S43). A next step is to check the wire number 16 on a tube (11a or 11b) with an impressed number attached to one end of a wire 10 (S44), followed by finding the connection position on one (device A) of the devices to be interconnected (S45) and performing the wire connection (S46). This operation is performed for all wires 10 within the harness 14. Then, the connections are checked (S47). In such a wire connection operation, because an operator cannot intuitively find devices to be interconnected only from information of the harness number 15 on the harness tag 13 and the wire number 16 on the tubes 11a, 11b with an impressed number, the operator needs to find devices to be interconnected according to the harness number and the wire number by using design drawing information or the like. In general, the types, manufacturer names, etc. of devices are only written on a design drawing or the like and it takes time to identify devices to be interconnected and find positions to which wires should be connected according to the harness number 15 on the harness tag 13 and the wire number 16 on the tubes 11a, 11b with an impressed number, and a connection error would be liable to occur because of incorrectly perceiving such devices.

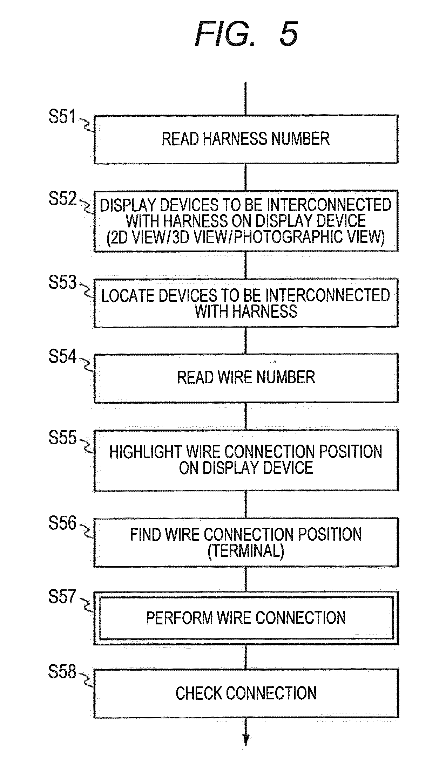

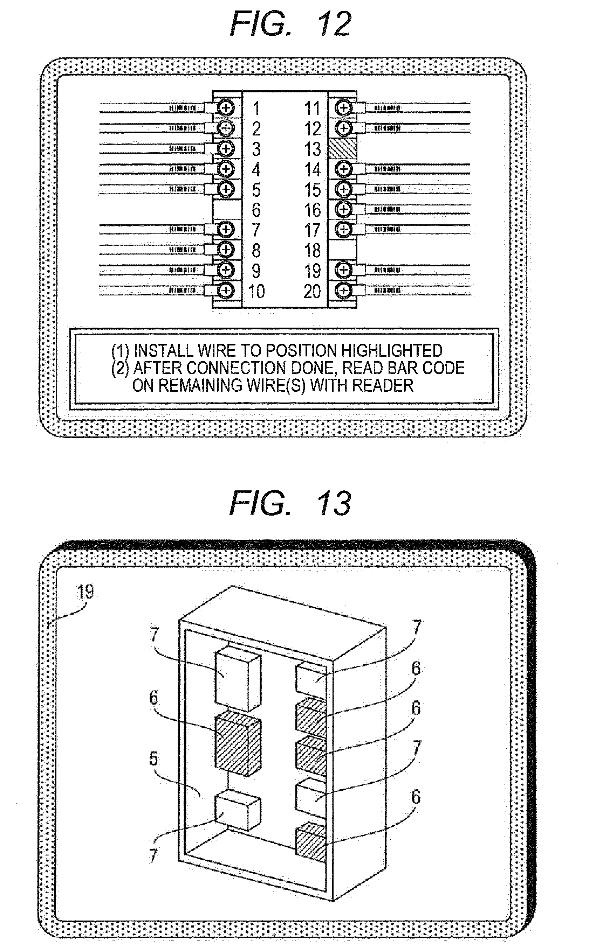

Therefore, in the present embodiment, a wire connection operation is to be performed by a procedure which is illustrated in Fig. 5. A wire connection operation of the present embodiment is described using Figs. 1, 2, and 5. When beginning a wire connection operation, first, an operator may take out a harness 14 to be used in the wire connection operation and get the harness number 15 on the harness tag 13 using the reader (mark reading means) 18 (S51). When the harness number 15 is read in by the reader 18, the control unit 30, based on the read harness number 15, finds devices to be interconnected with the harness 14 from an inter-device wiring list recorded in the design database 40 and displays a two-dimensional view, a three-dimensional view, a photograph, or the like presenting the shapes of the devices (devices 6 to be interconnected) and the positions in which the devices are installed on the display device 19 placed close to the operator (S52). An example of a displayed view is illustrated in Fig. 13. The operator can locate the devices to be interconnected by looking this displayed view (S53). Because the displayed view is a realistic depiction represented in two dimensions or three dimensions or a photograph, the operator can intuitively perceive the shapes and positions of work objects and it becomes possible to find actual devices in a short time. Reference numeral 5 denotes a control panel and reference numeral 7 denotes a device other than those to be interconnected.

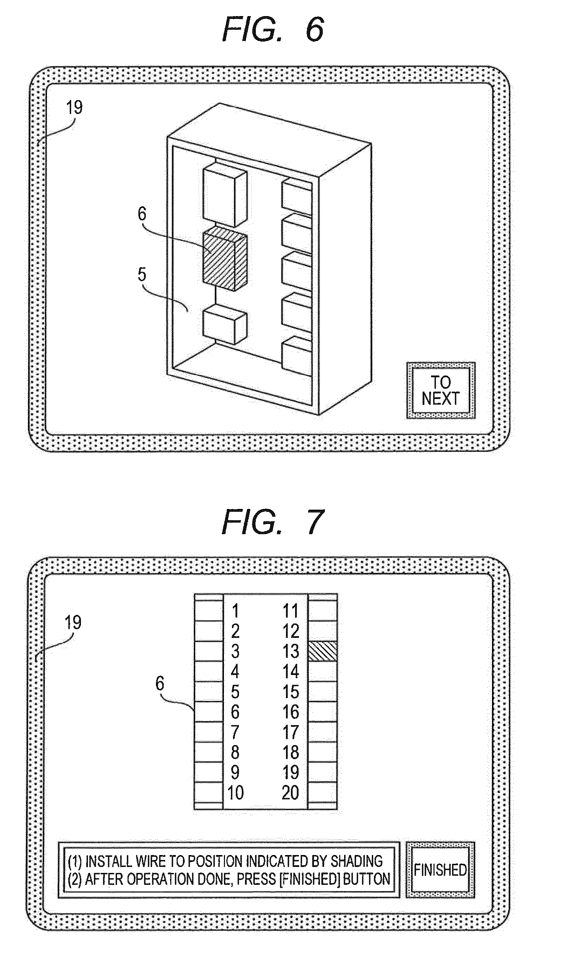

Then, the control unit 30 searches out a wire connection completion state diagram recorded in the design database 40 and displays it on the display device 19. By looking this diagram displayed, the operator can image a finished state and, if appropriate, may temporarily fix the harness 14 to the control panel 5 to make it easy to perform the wire connection operation. After that, to perform an operation for connecting each individual wire, the wire number 16 on the tube (11a or 11b) with an impressed number attached to a wire 10 is read by the reader 18 (S54). When the wire number 16 is read in, the control unit 30, based on the read wire number 16, displays any or some of a two-dimensional view, a three-dimensional view, an external view, and an external photograph presenting a device to which the wire should be connected from an inter-device wiring list recorded in the design database 40, as is illustrated in Fig. 6 (S55), and the connection position of the wire 10 is highlighted to be more prominent than other wire connection positions and displayed on the display device 19, as is illustrated in Fig. 7 (the connection position is represented by parallel oblique lines in the figure) (S55). The device in Fig. 6 and the connection position in Fig. 7 should be displayed in one screen to make it easy for the operator to perceive the situation; however, these can be displayed separately. By looking this displayed view, the operator can exactly perceive the connection position to work on (S56). After that, the operator may connect the wire 10 to the device 6 to which the wire should be connected, according to the displayed view (S57). By repeating this operation, finding a position to which a wire should be connected and connecting the wire to the position can be performed surely and speedily. After that, the connections are checked (S58).

As a result of an operation of making wire connections between the device A and other devices B, C, and D performed according to the above-described method, even if this operation was performed by one who was not a skilled worker, it was possible to shorten the time taken to perform the wire connection operation and reduce connection errors, as compared with a case of doing the same in a conventional way by a skilled worker.

Although the foregoing description assumes a case in which the harness number 15 impressed on the harness tag 13 and the wire number impressed on the tubes 11a, 11b attached to both ends of a wire are bar codes which are easy to read by the reader 18, information such as a device and a terminal number to which the wire should be connected may be impressed in digits and letters which can be visually checked by operator (marking 55 for visual check by operator), along with the bar codes, as is illustrated in Figs. 15A and 15B, so that the operator who performs a wire connection operation can make sure of the device and connection position to which the wire should be connected. It is preferable to attach this impression (marking) to both ends of a wire, even though the impression (marking) attached to one end would produce an effect of reducing wire connection errors. Information that a bar code 50 contains may be a device name, a box name, and a terminal name themselves or may be symbols corresponding to these pieces of information. A label of a bar code or something else may be an electronic tag.

According to the present embodiment described hereinbefore, it is possible to provide a wiring operation instruction method enabling to shorten the time taken to perform a connection operation and to reduce connection errors. By additionally providing marking of information that can be visually checked by the operator, along with information to be read by the reader, on one end of, or preferably both ends of a wire, it is possible to further reduce wire connection errors by the operator. By connecting the control unit and the design database by way of communication, it becomes unnecessary to carry the design database to a site of operation and it is possible to reduce the amount of carriage and to eliminate a risk of loss of information recorded in the design database. By connecting the reader and the control unit by way of communication, harness and cable entangling is avoided and the easiness to work in site is improved.

### Second Embodiment

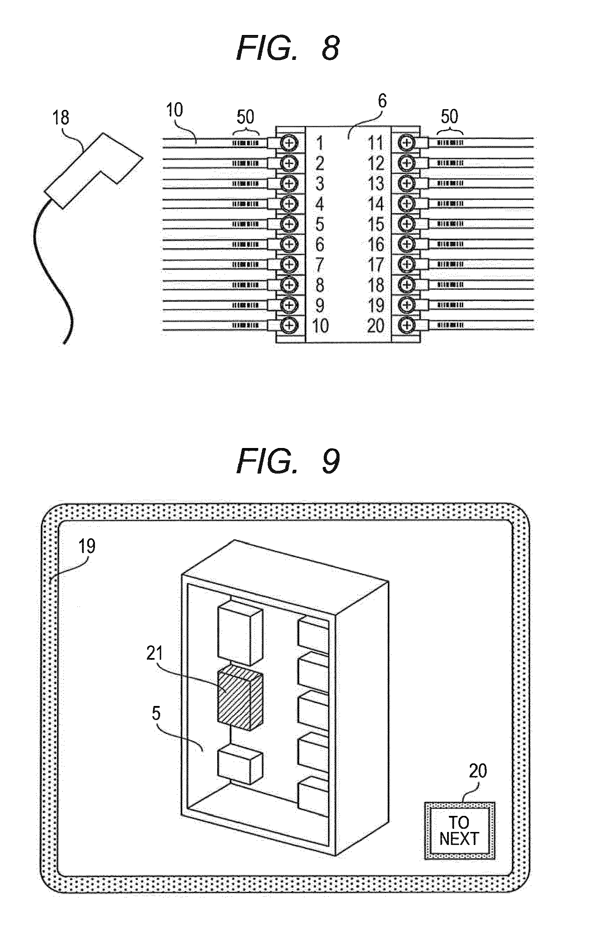

A second embodiment is described. Matters described in the first embodiment, but not described in the present embodiment are applicable to the present embodiment as well, unless in exceptional situations. In the present embodiment, particularly, descriptions are provided for a method for checking the states of connections after the completion of connecting wires to each device, using Figs. 8 through 12.

Fig. 8 is a schematic diagram of a terminal connecting block for explaining an inspection method after wire connections in a wiring operation instruction method pertaining to the present embodiment. Checking whether wires 10 are connected to specified positions on a device 6 to which the wires should be connected is performed by reading the number on the tube 11 with an impressed number attached to each wire 10 using the reader 18, as is illustrated in Fig. 8. In the present embodiment, descriptions are provided using an example in which the number is impressed in the form of a bar code 50 directly on each wire, instead of the tube 11 with an impressed number.

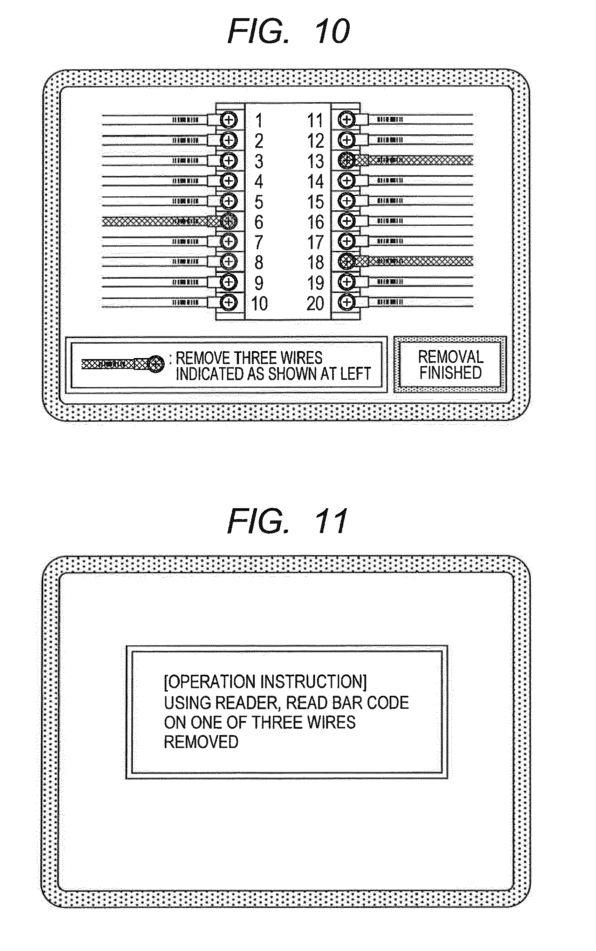

An inspection procedure starts with displaying, in a two-dimensional view, a three-dimensional view, a photograph, or the like, the position of a device 21 (device to be inspected) for which it should be checked whether wires 10 are connected to correct positions on the device 6 to which the wires should be connected on the display device 19 placed close to an operator. To prevent the operator from incorrectly perceive it, the device 21 to be inspected is highlighted and displayed (represented by parallel oblique lines in the figure) (Fig. 9). After the device 21 to be inspected can be located, the operator may switch over the screen by pressing a screen shift button 20 within the screen of the display device 19. Examples of screens to switch to are presented in Figs. 10 through 12. On the display device 19, the state of the device 6 to which the wires should be connected after the completion of wire connections is displayed in a two-dimensional view, a three-dimensional view, or a photograph. An operation method (operation instruction) and positions to be inspected are highlighted and displayed (represented by parallel oblique lines in the figure).

According to the operation instruction, the operator may read the number or bar code 50 on the tube with an impressed number attached to a wire 10 or impressed directly on the wire 10 using the reader (mark reading means) 18. Once it has been read, a next instruction is displayed on the display device 19. By reading the bar code impressed on each wire 10 in turn according to the instruction displayed on the display device 19 using the reader (mark reading means) 18, inspection is completed.

If all wires 10 are connected to correct positions, a display is provided to indicate that the connection operation for the device is performed properly. If the connection operation is performed normally, a next operation instruction may be displayed without providing such display.

If an error in the connection operation has been found as a result of the inspection, a corrective operation instruction is displayed on the display device 19. Alternatively, it is also possible to alert the operator with sound by sound generating means such as a buzzer connected to the control unit. Alternatively, it is also possible to alert the operator with both the instruction and sound. An example of the corrective operation instruction is presented in Fig. 10. Fig. 10 presents an example in which three wires are installed to incorrect positions. First, wires that should be removed once are displayed on the display device 19 (the wires connected to a sixth terminal, a thirteenth terminal, and an eighteenth terminal represented by parallel oblique lines). Then, the operator may remove the wires according to the operation instruction in Fig. 10.

Then, an instruction to read the bar code impressed on one of the removed wires 10 to find the connection destination of the removed wire 10 is displayed on the display device 19 (Fig. 11). Upon reading the bar code 50 impressed on the wire 10, the display screen switches over and the connection destination of the wire is highlighted and displayed (Fig. 12). According to an instruction on the screen, the operator may connect the wire 10 to the highlighted position. Upon having finished the connection, the operator may proceed to a next operation according to an instruction on the screen.

As a result of an operation of inspecting the states of wire connections between the device A and other devices B, C, and D performed according to the above-described method, even if this operation was performed by one who is not a skilled worker, it was possible to inspect the states of the connections and correct connection errors easily and finish the operation in a short time.

According to the present embodiment described hereinbefore, it is possible to provide a wiring operation instruction method enabling to inspect the states of connections and correct connection errors easily and to shorten the time taken to perform such an operation.

The present invention is not limited to the embodiments described in the foregoing context and various modifications are included therein. For example, the foregoing embodiments are those described in detail to explain the present invention clearly and the invention is not necessarily limited to those including all components described. A part of the configuration of an embodiment can be replaced by the configuration of another embodiment. The configuration of an embodiment can be added to the configuration of another embodiment. As for a part of the configuration of each embodiment, another configuration can be added to it or it can be removed and replaced by another configuration.

### List of Reference Signs

5 ... Control panel, 6 ... Devices to be interconnected or Device to which the wire(s) should be connected, 7 ... Device other than those to be interconnected, 10 ... Wire, 11, 11a, 11b ... Tube with an impressed number, 12 ... Terminal, 13 ... Tag with an impressed harness number, 14 ... Harness, 15 ... Harness number, 16 ... Wire number, 18 ... Reader (Mark reading means), 19 ... Display device, 20 ... Screen shift button, 20a ... Device A, 20b ... Device B, 20c ... Device C, 20d ... Device D, 21 ... Device to be inspected, 30 ... Control unit, 40 ... Design database, 50 ... Bar code, 55 ... Marking for visual check by operator

## Claims

1. A wiring operation instruction method using a system comprising mark reading means for reading wire identification marks attached to wires or a wire bundle, a design database in which design information required for connecting the wires or the wire bundle is stored, control means for retrieving information including at least some of the design information stored in the design database according to wire information of the wire identification marks read by the mark reading means, and display means for displaying the information retrieved from the design database, the wiring operation instruction method comprising:
a step in which the mark reading means reads a first one of the wire identification marks attached to the wire bundle;
a step in which, according to information of the first wire identification mark read by the mark reading means, the control means retrieves from the design database and outputs a two-dimensional view or/and a three-dimensional view presenting positions where devices that should be interconnected with the wire bundle are installed, included in the design information; and
a step in which the display means displays a view that has thus been output.

2. The wiring operation instruction method according to claim 1,
wherein the wire identification marks attached to the wires or the wire bundle are numbers or bar codes.

3. The wiring operation instruction method according to claim 1,
wherein the outputting step outputs an external view or/and an external photograph of devices that should be interconnected with the wire bundle, included in the design information, instead of a two-dimensional view or/and a three-dimensional view presenting the positions where the devices that should be interconnected with the wire bundle are installed.

4. The wiring operation instruction method according to claim 1,
wherein the displaying step displays a two-dimensional view or/and a three-dimensional view presenting the positions where the devices that should be interconnected with the wire bundle are installed on the display means and then displays an external view or/and an external photograph of the devices that should be interconnected with the wire bundle, included in the design information, on the display means.

5. The wiring operation instruction method according to claim 1, further comprising:
a step in which the mark reading means reads a second wire identification mark attached to each of individual wires in the wire bundle, wherein the individual wires are to be connected to devices that should be interconnected with the wire bundle; and
a step in which, according to second wire information read by the mark reading means, the control means provides an output to display any or some of a two-dimensional view, a three-dimensional view, an external view, and an external photograph presenting a device to which each of the wires should be connected on the display means and to highlight and display a connection position of each of the wires.

6. A wiring operation instruction method using a system including mark reading means for reading wire identification marks attached to individual wires of a wire bundle, a design database in which design information required for connecting the wires is stored, control means for retrieving information including at least some of the design information stored in the design database according to wire information of the wire identification marks read by the mark reading means, and display means for displaying the information retrieved from the design database, the wiring operation instruction method comprising:
a displaying step in which the display means displays an order in which to read the wire identification marks attached to the individual wires, wherein an operation of connecting the individual wires to a specified device was completed;
a reading step in which the mark reading means reads the wire identification marks; and
a checking step in which the control means checks information of the wire identification marks which have been read against device connection information included in the design information registered in the design database and checks whether a wire connection operation is performed properly.

7. The wiring operation instruction method according to claim 6,
wherein the displaying step displays any or some of a two-dimensional view, a three-dimensional view, an external view, and an external photograph presenting the specified device to which the wires were connected by a connection operation and highlights and displays a connection position of each of the wires; and
the reading step includes a step in which the mark reading means reads the wire identification mark attached to each of the individual wires connected to the highlighted position.

8. The wiring operation instruction method according to claim 6,
wherein the system further includes a sound generating means; and
the wiring operation instruction method further includes a step of making an operator aware of a result of checking by the checking step with a display presented by the display means or/and a sound produced by the sound generating means.

9. The wiring operation instruction method according to claims 6 through 8,
wherein if a wire connection error has been found as a result of checking in the checking step, the control means outputs a correct installation position and a corrective operation procedure to the display means.

10. The wiring operation instruction method according to claim 5, comprising:
a displaying step in which the display means displays an order in which to read the second wire identification marks attached to the individual wires, wherein an operation of connecting the individual wires to a specified device was completed;
a reading step in which the mark reading means reads the second wire identification marks; and
a checking step in which the control means checks information of the second wire identification marks which have been read against device connection information included in the design information registered in the design database and checks whether a wire connection operation is performed properly.

11. The wiring operation instruction method according to claim 5,
wherein each of the second wire identification marks includes information to be read by the mark reading means and information to be read by an operator.
